# EUROPEAN PATENT SPECIFICATION

(11) **EP 4 531 444 B1**
(45) Date of publication and mention of the grant of the patent: **11.03.2026**
(21) Application number: 23925586.2
(22) Date of filing: 12.12.2023
(51) Int. Cl.: H04W 4/16, H04W 4/80, H04M 1/72412, H04M 1/60

(54) **COMMUNICATION METHOD, SYSTEM AND ELECTRONIC DEVICE**
KOMMUNIKATIONSVERFAHREN, SYSTEM UND ELEKTRONISCHE VORRICHTUNG
PROCÉDÉ DE COMMUNICATION, SYSTÈME ET DISPOSITIF ÉLECTRONIQUE

(30) Priority: 15.08.2023 CN 202311026635
(43) Date of publication of application: 02.04.2025
(73) Proprietor: Honor Device Co., Ltd., Shenzhen, Guangdong 518040 (CN)
(72) Inventor: LI, Wei, Shenzhen, Guangdong 518040 (CN)
(74) Representative: Isarpatent
(86) International application number: PCT/CN2023/138227
(87) International publication number: WO 2025/035666

(56) References cited:
- WO-A1-2022/007848
- WO-A1-2023/045784
- CN-A- 114 422 984
- CN-A- 115 002 934
- CN-A- 116 744 244
- US-A1- 2010 069 007
- US-A1- 2010 069 007
- US-A1- 2011 098 002

## Description

### TECHNICAL FIELD

This disclosure relates to the field of Bluetooth technologies, and the invention in particular, to a communication method, a system, and an electronic device.

### BACKGROUND

The advanced audio distribution profile (advanced audio distribution profile, A2DP) and the hands-free profile (hands-free profile, HFP) are two protocols for transmitting audio services in a first electronic device (described below taking a mobile phone as an example). To be specific, through the A2DP and the HFP, the mobile phone may transmit audio data to a second electronic device (described below taking a Bluetooth headset as an example) with a Bluetooth function by using Bluetooth. The A2DP features non-real-time audio transmission and is used to realize multimedia services such as playing music. The HFP features real-time audio transmission and is used to realize call services such as real-time voice.

Bluetooth physical links include synchronous links (synchronous connection oriented, SCO) and asynchronous links (asynchronous connection less, ACL). The SCO links are used to transmit data with a high requirement on real time, for example, audio data of the call service. The ACL links are used to transmit data without a requirement on real time, for example, audio data of a music application. Therefore, to ensure call quality, in the call service of the mobile phone, the audio data needs to be transmitted on the SCO links through the HFP.

However, in some cases in which, for example, the mobile phone enables the Bluetooth function, and has been paired with the Bluetooth headset but is not connected thereto, if receiving incoming call information, the mobile phone plays an incoming call ring tone through the Bluetooth headset according to specifications of a Bluetooth protocol. Therefore, the mobile phone establishes a connection with the Bluetooth headset. When the mobile phone establishes the connection with the Bluetooth headset, if HFP and A2DP related to Bluetooth transmission are registered by using a getProfileProxy function, the mobile phone transmits the incoming call ring tone first through the A2DP and then switches to transmitting the incoming call ring tone through the HFP because the registering progress of the A2DP is faster than that of the HFP. In the switching process, the mobile phone suspends transmission of audio data of the incoming call ring tone, and consequently, a phenomenon of lag of the incoming call ring tone of the mobile phone occurs.
US 2010/069007 A1 relates to an information processing method apparatus, exemplified by a mobile phone, and its interaction with external devices such as Bluetooth headsets.

### SUMMARY

With the aim of the invention to overcome the phenomenon of lag of the incoming call ring tone of the mobile phone, this application provides a communication method, a system, and an electronic device. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, this application provides a communication method, including: corresponding to satisfying a first condition by the first electronic device, the first electronic device completes registration of a hands-free profile (HFP) and an advanced audio distribution profile (A2DP); receiving, by the first electronic device, incoming call information, and detecting a second electronic device that is in Bluetooth pairing with the first electronic device and has not established a Bluetooth connection therebetween; and establishing, by the first electronic device, the Bluetooth connection with the second electronic device, and establishing, by the first electronic device, the hands-free profile (HFP) first to transmit audio data to the second electronic device through the hands-free profile (HFP), where the audio data includes an incoming call ring tone corresponding to the incoming call information, and the first electronic device establishes an advanced audio distribution profile (A2DP) connection after establishing the hands-free profile (HFP) connection.

It may be understood that the first electronic device mentioned in this application includes any electronic device (such as a mobile phone) that is capable of performing voice communication and has the Bluetooth function. The second electronic device mentioned in this application includes any electronic device (such as a Bluetooth headset) that has the Bluetooth function and has an audio data play function.

Therefore, the mobile phone completes registrations of the HFP and the A2DP. During an incoming call of the mobile phone, the mobile phone establishes the HFP connection with the Bluetooth headset first according to the type of the call service, and the incoming call ring tone of the mobile phone is played by the Bluetooth headset through the HFP. Then, the mobile phone establishes the A2DP connection with the Bluetooth headset. The mobile phone no longer plays the incoming call ring tone through the A2DP. Therefore, a phenomenon of lag of the incoming call ring tone is avoided when playing of the incoming call ring tone of the mobile phone by the Bluetooth headset through the A2DP is switched to playing of the incoming call ring tone of the mobile phone by the Bluetooth headset through the HFP, and the call experience of a user is improved.

In a possible implementation of the first aspect, the first condition includes at least one of the following: entering a startup phase, enabling the Bluetooth function, and detecting the electronic device that has been in Bluetooth pairing.

It may be understood that the first condition mentioned in this application may be that the mobile phone is in an initialization phase. The initialization phase of the mobile phone includes, but is not limited to, entering a startup phase, enabling the Bluetooth function, and detecting the electronic device that has been in Bluetooth pairing.

In a possible implementation of the first aspect, the first electronic device establishes the hands-free profile (HFP) connection in the following way: sending, by an audio manager application in the first electronic device, a message that the hands-free profile (HFP) connection is established with the second electronic device to a Bluetooth application, where the Bluetooth application establishes the hands-free profile (HFP) connection.

In a possible implementation of the first aspect, the step of transmitting audio data to the second electronic device through the hands-free profile (HFP) includes: receiving, by a telephone application in the first electronic device, information that the hands-free profile (HFP) is successfully established, and sending a sound-making device switching instruction to an audio framework; and selecting, by the audio framework, the second electronic device establishing the hands-free profile (HFP) connection with the first electronic device as the sound-making device, and sending the audio data to the second electronic device.

It may be understood that the sound-making device may also be a speaker and an earpiece of the mobile phone or a device such as a sound device connected to the mobile phone, and the type of the sound-making device is not limited in this application.

In a possible implementation of the first aspect, the step of establishing, by the first electronic device, the advanced audio distribution profile (A2DP) connection after establishing the hands-free profile (HFP) connection includes: sending, by the audio manager application in the first electronic device, a message that the advanced audio distribution profile (A2DP) connection is established with the second electronic device to the Bluetooth application after establishing, by the first electronic device, the hands-free profile (HFP) connection, where the Bluetooth application establishes the advanced audio distribution profile (A2DP) connection.

It may be understood that to guarantee that both call service and multimedia service in the mobile phone may be played through the Bluetooth headset, the mobile phone needs to establish double connections of advanced audio distribution profile (A2DP) and hands-free profile (HFP) with the Bluetooth headset. After the mobile phone establishes the HFP connection with the Bluetooth headset, the mobile phone establishes the A2DP connection with the Bluetooth headset.

In a possible implementation of the first aspect, the communication method further includes: no longer reselecting, by the audio framework in the first electronic device, the sound-making device after establishing, by the first electronic device, the advanced audio distribution profile (A2DP) connection with the second electronic device.

It may be understood that because the call service is the audio data transmitted on the SCO link through the HFP, it features real-time audio transmission. To guarantee the call quality, the audio framework selects the Bluetooth headset that establishes the HFP connection with the mobile phone as the sound-making device and no longer reselects the sound-making device.

In a possible implementation of the first aspect, the step of completing, by the first electronic device, registrations of the hands-free profile (HFP) and the advanced audio distribution profile (A2DP) includes: completing, by the first electronic device, registrations of the hands-free profile (HFP) and the advanced audio distribution profile (A2DP) by executing a first preset function.

It may be understood that the first preset function includes a getProfileProxy function.

In a possible implementation of the first aspect, the step of establishing, by the Bluetooth application, the hands-free profile (HFP) connection includes: establishing, by the Bluetooth application, the hands-free profile (HFP) connection with the second electronic device by calling a second preset function.

It may be understood that the second preset function includes a ConnectHfp function in an onServiceConnected function.

In a possible implementation of the first aspect, the step of establishing, by the Bluetooth application, the advanced audio distribution profile (A2DP) connection includes: establishing, by the first electronic device, the advanced audio distribution profile (A2DP) connection with the second electronic device by calling a third preset function.

It may be understood that the third preset function includes a ConnectA2dp function in the onServiceConnected function.

According to a second aspect not claimed, this application provides a computer-readable storage medium, where the computer-readable storage medium stores an instruction, and the instruction, when executed on the electronic device, enables the electronic device to implement the communication method according to the first aspect and any one of possible implementations in the first aspect.

According to a third aspect according to the invention, this application provides an electronic device, including: a memory, configured to store an instruction executed by one or more processors of the electronic device; and a processor, configured to execute the instruction stored in the memory to implement the communication method according to the first aspect and any one of possible implementations in the first aspect.

### BRIEF DESCRIPTION OF DRAWINGS

FIG. 1(a) shows a schematic diagram of a scenario of an incoming call of a mobile phone 20 according to some embodiments of this application;
FIG. 1(b) shows a schematic diagram of another scenario of an incoming call of a mobile phone 20 according to some embodiments of this application;
FIG. 2 shows a schematic diagram of a software architecture of a mobile phone 20 according to some embodiments of this application;
FIG. 3 shows a schematic interactive diagram of a mobile phone 20 according to some embodiments of this application;
FIG. 4 shows a schematic interactive diagram of a mobile phone 20 according to some embodiments of this application; and
FIG. 5 shows a schematic structural diagram of hardware of a mobile phone 20 according to some embodiments of this application.

### DESCRIPTION OF EMBODIMENTS

Illustrative embodiments of this application include, but are not limited to, a communication method, a storage medium, and an electronic device.

The first electronic device mentioned in this application may be any electronic device that is capable of performing voice communication and has the Bluetooth function, including, but not limited to, a mobile phone, a media player, a tablet computer, a notebook computer, an ultra-mobile personal computer (ultra-mobile personal computer, UMPC), or a personal digital assistant (personal digital assistant, PDA). For ease of description, in this application, the first electronic device that is a mobile phone 20 is introduced as an example.

The second electronic device mentioned in this application may be any electronic device that has the Bluetooth function and has an audio data play function, including, but not limited to, a device such as a wireless headset, a wireless speaker, a wireless wristband, a wireless in-vehicle device, wireless smart glasses, a wireless watch, or an augmented reality (augmented reality, AR)/virtual reality (virtual reality, VR) device. A specific form of the second electronic device is not specially limited in this application. For ease of description, in this application, the second electronic device that is the Bluetooth headset 10 and the tablet computer 30 is introduced.

Technical solutions of some embodiments of this application are described below with reference to accompanying drawings.

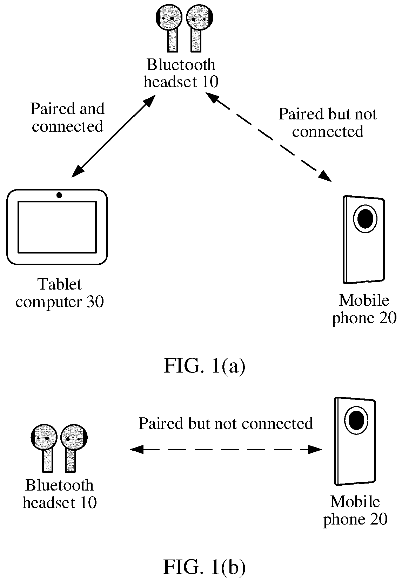

FIG. 1(a) shows a schematic diagram of a scenario of an incoming call of a mobile phone 20. As shown in FIG. 1(a), the Bluetooth headset 10 and the tablet computer 30 are in a state of being paired and connected, to be specific, the Bluetooth headset 10 and the tablet computer 30 have established a trusted relationship through authentication, and an output audio of the tablet computer 30 may be played through the Bluetooth headset 10. In this case, if the mobile phone 20 has enabled the Bluetooth function, and has been paired with the Bluetooth headset 10 but is not connected thereto, i.e., the Bluetooth headset 10 and the mobile phone 20 have established the trusted relationship through authentication previously, an output audio of the mobile phone 20 may be played externally through a loudspeaker of the mobile phone rather than played through the Bluetooth headset 10. In this case, if the mobile phone 20 receives an incoming call, the mobile phone 20 occupies the Bluetooth headset 10 according to specifications of the Bluetooth protocol, i.e., the mobile phone 20 is connected to the Bluetooth headset 10.

FIG. 1(b) shows a schematic diagram of another scenario of an incoming call of a mobile phone 20. As shown in FIG. 1(b), if the mobile phone 20 has enabled the Bluetooth function, and has been paired with the Bluetooth headset 10 but is not connected thereto, to be specific, the Bluetooth headset 10 and the mobile phone 20 have established the trusted relationship through authentication, but a user has manually interrupts the connection between the Bluetooth headset 10 and the mobile phone 20, the output audio of the mobile phone 20 may be played externally through the loudspeaker of the mobile phone rather than played through the Bluetooth headset 10. In this case, if the mobile phone 20 receives the incoming call, the mobile phone 20 is connected to the Bluetooth headset 10 according to specifications of the Bluetooth protocol.

As mentioned above, when the mobile phone 20 receives an incoming call message, to play an incoming call ring tone of the mobile phone 20 through the Bluetooth headset 10, the mobile phone 20 needs to establish HFP and A2DP connections. In the connection establishing process, a phenomenon of lag of the incoming call ring tone of the mobile phone occurs. Specifically, after receiving the incoming call message, the mobile phone 20 registers protocols for transmitting an audio service first, including HFP, a protocol for realizing a call service, and A2DP, a protocol for realizing a multimedia service, and then establishes the A2DP and HFP connections between the mobile phone 20 and the Bluetooth headset 10. After the A2DP and HFP connections between the mobile phone 20 and the Bluetooth headset 10 are established, the mobile phone 20 may transmit audio data through Bluetooth, i.e., play the incoming call ring tone on the Bluetooth headset 10. The progresses of registering HFP and A2DP by the mobile phone 20 are parallel progresses, i.e., the mobile phone 20 registers HFP and A2DP simultaneously. However, if the mobile phone 20 executes a getProfileProxy function, the speed of registering A2DP by the mobile phone 20 is higher, i.e., the mobile phone 20 completes registration of A2DP first. Because the progress that the mobile phone 20 establishes the HFP and A2DP connections with the Bluetooth headset 10 is a serial progress, after the mobile phone 20 completes registration of A2DP, the mobile phone 20 establishes the A2DP connection with the Bluetooth headset 10 first. For example, the mobile phone 20 may establish the A2DP connection with the Bluetooth headset 10 first by executing a ConnectA2dp function in the onServiceConnected function, and play the incoming call ring tone on the Bluetooth headset 10 through A2DP.

To ensure that the call service and the multimedia service in the mobile phone 20 can be played through the Bluetooth headset 10, after the mobile phone 20 receives the incoming call message, the mobile phone 20 needs to establish dual connections of A2DP and HFP with the Bluetooth headset 10. After the mobile phone 20 establishes the A2DP connection with the Bluetooth headset 10, the mobile phone 20 may complete registration of HFP in a period of time. The mobile phone 20 may establish the HFP connection with the Bluetooth headset 10 only when the mobile phone 20 completes registration of HFP. For example, the mobile phone 20 may establish the HFP connection with the Bluetooth headset 10 by executing a ConnectHfp function in the onServiceConnected function. The call service is audio data transmitted on an SCO link through HFP and features real-time audio transmission. When the mobile phone 20 establishes the HFP connection with the Bluetooth headset 10, the mobile phone 20 will preferentially play the incoming call ring tone on the Bluetooth headset 10 through HFP, i.e., the mobile phone 20 will be switched from playing the incoming call ring tone on the Bluetooth headset 10 through A2DP to playing the incoming call ring tone on the Bluetooth headset 10 through HFP. In the process of switching the incoming call ring tone by the mobile phone 20, because the mobile phone 20 suspends an audio flow of the incoming call ring tone, a phenomenon of lag of the incoming call ring tone of the mobile phone 20 occurs.

To solve the above problem, this application provides a method for solving lag of the incoming call ring tone. Specifically, the mobile phone may be controlled to complete registration of HFP and A2DP in advance. For example, when the mobile phone is turned on, the Bluetooth function is enabled, or the mobile phone detects a Bluetooth headset that has been paired previously but is not connected thereto, the mobile phone completes registration of HFP and A2DP through the getProfileProxy function. Then, if the mobile phone receives incoming call information, the mobile phone may establish the HFP connection with the Bluetooth headset first, and then establish the A2DP connection with the Bluetooth headset. For example, the mobile phone establishes the HFP connection with the Bluetooth headset first by executing the ConnectHfp function in the onServiceConnected function; and then establishes the A2DP connection with the Bluetooth headset by executing the ConnectA2dp function in the onServiceConnected function. In this way, the incoming call ring tone of the mobile phone is played on the Bluetooth headset through HFP. Therefore, the phenomenon of lag of the incoming call ring tone is avoided when playing of the incoming call ring tone of the mobile phone on the Bluetooth headset through the A2DP is switched to playing of the incoming call ring tone of the mobile phone on the Bluetooth headset through the HFP, and call experience of the user is improved.

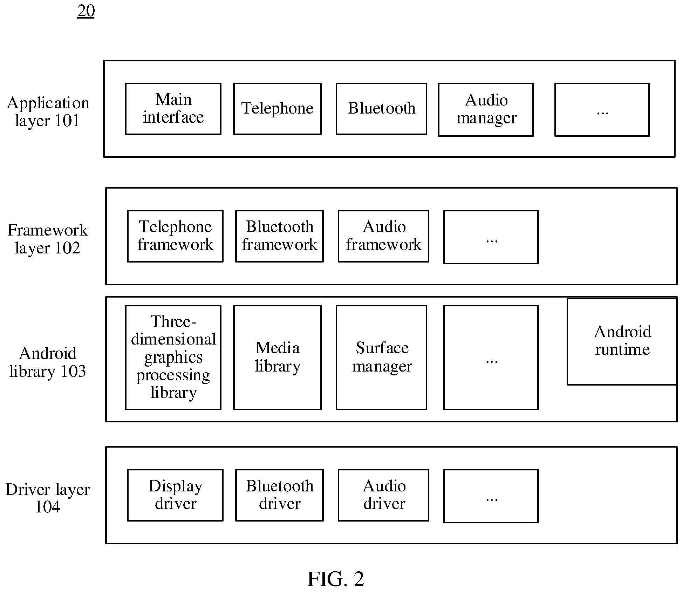

A software architecture of the mobile phone 20 mentioned in this application are introduced below with reference to FIG. 2. FIG. 2 shows a schematic diagram of the software architecture of the mobile phone 20. As shown in FIG. 2, the software architecture of the mobile phone 20 includes an application layer 101, a framework layer 102, an Android library 103, and a driver layer 104 from top to bottom.

The application layer 101 may include applications such as a main interface, a telephone, Bluetooth, and an audio manager. The application layer 101 may further include other applications such as a payment application, a shopping application, a bank application, a chat application or a money management application, which is not limited in this application. In this application, the telephone application is configured to send a broadcast of the incoming call of the mobile phone 20 and to send the audio flow of the incoming call ring tone in the mobile phone 20 to the framework layer 102. The audio manager application is configured to register A2DP and HFP and to send the message of establishment of the HFP and A2DP connections with the Bluetooth headset 10 to the Bluetooth application. The Bluetooth application is configured to establish the HFP and A2DP connections with the Bluetooth headset 10 and to send the broadcast that the connections are successful to the framework layer 102.

The framework layer 102 includes a telephone framework, a Bluetooth framework, an audio framework and the like. The framework layer 102 provides the application layer 101 with a multilingual framework, including an operational capability (which may include a CPU computing capability, a graphics processing unit (graphics processing unit, GPU) computing capability, an image signal processor (image signal processor, ISP) computing capability, and the like), a voice recognition capability (which may include a voice recognition capability of a microphone, a voice recognition capability and the like), a safety capability in the device safety protection aspect (which may include a trustable operating environment safety level and the like), a display capability (which may include a screen resolution, a screen size and the like), a play capability (which includes an amplifying capability, a stereo effect capability and the like, and a storage capability (which may include a memory capability, a random access memory (random access memory, RAM) capability of the device and the like)), which is not limited herein. The application of the application layer 101 may realize corresponding functions by calling functions corresponding to the capabilities provided by the framework layer 102.

The telephone frame is configured to provide a communication function of the mobile phone 20, for example, call status management (including connected and hang-up). The Bluetooth framework is configured to provide a Bluetooth service of the mobile phone 20. The audio framework receives audio services sent by the applications of the application layer 101 to identify the types of the audio services; and performs service arbitration and occupation. In this application, the audio framework is configured to select the Bluetooth headset 20 that establishes A2DP or HFP connection with the mobile phone 20 as the sound-making device and to receive the audio flow of the ring tone.

The Android library 103 includes a surface manager, a media library, a three-dimensional graphics processing library, Android runtime and the like.

The surface manager is configured to manage a display subsystem, and provide fusion of 2D and 3D layers for a plurality of applications. The media library supports playback and recording in a plurality of common audio and video formats, and also support static image files, and the like. The media library may support a plurality of audio and video encoding formats, such as MPEG4, H.264, MP3, AAC, AMR, JPG, and PNG. The three-dimensional graphics processing library (for example OpenGL ES) is configured to implement three-dimensional graphics drawing, image rendering, composition, layer processing, and the like. The Android runtime (Android runtime) includes a kernel library and a virtual machine. The Android runtime is responsible for scheduling and management of an Android system. The core library includes two parts: a performance function that the Java language needs to invoke, and a core library of Android. The application layer 101 and the framework layer 102 run in the virtual machine. The virtual machine executes Java files of the application layer 101 and the framework layer 102 as binary files. The virtual machine is configured to execute functions such as object lifecycle management, stack management, thread management, security and exception management, and garbage collection.

The driver layer 104 may provide the mobile phone 20 with a uniform peripheral access capability and a management framework, including display driver, Bluetooth driver, audio driver and the like.

It may be understood that the software architecture of the mobile phone 20 shown in FIG. 2 is only an example. In some other embodiments, the software architecture applicable to embodiments of this application may be more or fewer, may be split or merged parts, or may be other architectures, which is not limited herein.

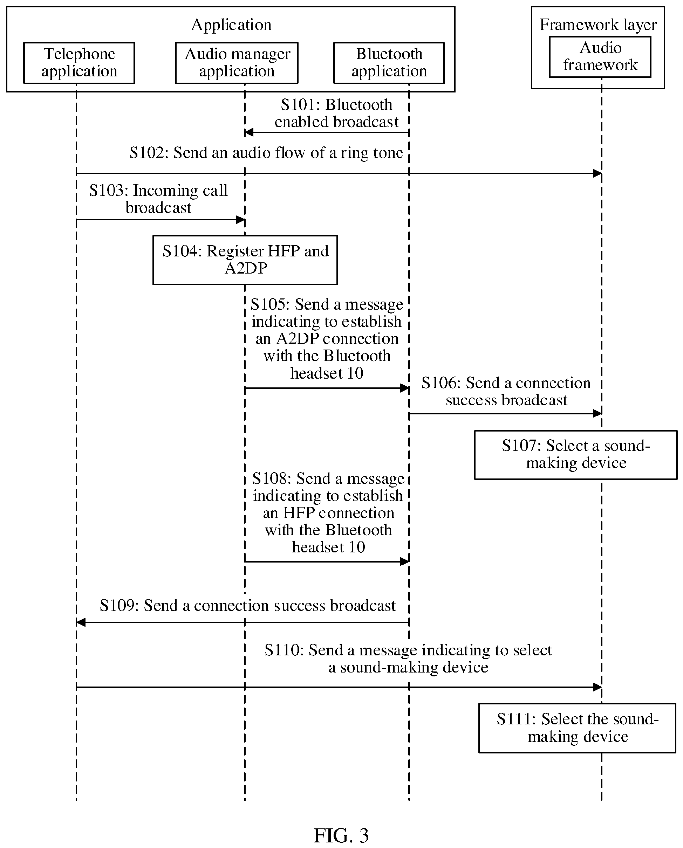

A specific flow of interaction in the mobile phone 20 in a case of an incoming call of the mobile phone 20 at present will be introduced below with reference to FIG. 3 and the software architecture of the mobile phone 20. FIG. 3 shows a schematic diagram of a flow of interaction in a mobile phone 20. As shown in FIG. 3, the flow of interaction includes the following steps:

S101: The Bluetooth application sends a Bluetooth enabling broadcast to the audio manager application.

When the Bluetooth of the mobile phone 20 is enabled, the Bluetooth application sends the Bluetooth enabling broadcast to the audio manager application.

S102: The telephone application sends the audio flow of the ring tone to the audio framework.

When the incoming call of the mobile phone 20 occurs, the telephone application sends the audio flow of the ring tone to the audio framework.

In some embodiments, the audio flow of the ring tone sent by the telephone application is of a type of a stream_ring function, and the type of the audio flow of the ring tone is not limited in this application.

S103: The telephone application sends an incoming call broadcast to the audio manager application.

When the incoming call of the mobile phone 20 occurs, the telephone application sends the incoming call broadcast to the audio manager application.

In some embodiments, step S102 may be executed after step S103, i.e., the telephone application sends the incoming call broadcast of the mobile phone 20 to the audio manager application first and then sends the audio flow of the ring tone to the audio framework. The sequence of sending the audio flow of the ring tone and the incoming call broadcast by the telephone application is not limited in embodiments of this application.

In some embodiments, the incoming call broadcast may include a telephone number of the incoming call, operator information of the incoming call and the like.

S104: The audio manager application registers HFP and A2DP.

When the incoming call broadcast of the mobile phone 20 is received, the audio manager application registers HFP and A2DP.

In some embodiments, the audio manager application may register HFP and A2DP by executing the getProfileProxy function. The specific implementation of registering HFP and A2DP by the audio manager application is not limited in this application.

The progress of registering HFP and A2DP by the audio manager application is a parallel progress, i.e., the audio manager application registers HFP and A2DP simultaneously. If the mobile phone 20 executes the getProfileProxy function, the speed of registering A2DP by the audio manager application is higher, i.e., the audio manager application completes registration of A2DP first.

As mentioned above, the HFP features real-time audio transmission and is used to realize call services such as real-time voice. The A2DP features non-real-time audio transmission and is used to realize multimedia services such as playing music.

S105: The audio manager application sends the message of establishment of the A2DP connection with the Bluetooth headset 10 to the Bluetooth application.

As mentioned above, because the progress that the mobile phone 20 establishes the HFP and A2DP connections with the Bluetooth headset 10 is a serial progress, when the audio manager application registers A2DP, the audio manager application sends a message of establishment of the A2DP connection with the Bluetooth headset 10 to the Bluetooth application.

In some embodiments, the Bluetooth application then establishes the A2DP connection with the Bluetooth headset 10 by executing the ConnectA2dp function in the onServiceConnected function.

S106: The Bluetooth application sends a broadcast that the connection is successful to the audio framework.

The Bluetooth application sends the broadcast of establishment of the A2DP connection with the Bluetooth headset 10 to the audio framework.

In some embodiments, the Bluetooth application may send the broadcast that the connection is successful through a Context.sendBroadcast function.

S107: The audio framework selects a sound-making device.

The audio framework selects the Bluetooth headset 10 that establishes A2DP connection with the mobile phone 20 as the sound-making device.

In some embodiments, the sound-making device may also be a speaker and an earpiece of the mobile phone 20 or a device such as a sound device connected to the mobile phone 20, and the type of the sound-making device is not limited in this application.

S108: The audio manager application sends the message of establishment of the HFP connection with the Bluetooth headset 10 to the Bluetooth application.

To guarantee that both the call service and the multimedia service in the mobile phone 20 can be played through the Bluetooth headset 10, the mobile phone 20 needs to establish double connections of A2DP and HFP with the Bluetooth headset 10. After the mobile phone 20 establishes the A2DP connection with the Bluetooth headset 10, the mobile phone 20 may complete registration of HFP in a period of time. When the mobile phone 20 completes registration of HFP, the audio manager application sends the message of establishment of the HFP connection with the Bluetooth headset 10 to the Bluetooth application.

In some embodiments, the Bluetooth application establishes the HFP connection with the Bluetooth headset 10 by executing the ConnectHfp function in the onServiceConnected function.

S109: The Bluetooth application sends a broadcast that the connection is successful to the telephone application.

The Bluetooth application sends the broadcast of establishment of the HFP connection with the Bluetooth headset 10 to the telephone application.

In some embodiments, the Bluetooth application may send the broadcast that the connection is successful through a Context.sendBroadcast function.

S110: The telephone application sends a message of selecting the sound-making device to the audio framework.

After receiving the broadcast of establishment of the HFP connection with the Bluetooth headset 10, the telephone application sends the message of selecting the sound-making device to the audio framework.

S111: The audio framework selects a sound-making device.

As mentioned above, because the call service is the audio data transmitted on the SCO link through the HFP, it features real-time audio transmission. To guarantee the call quality, the audio framework selects the Bluetooth headset 10 that establishes the HFP connection with the mobile phone 20 as the sound-making device.

In the process of switching from playing, by the mobile phone 20, the incoming call ring tone on the Bluetooth headset 10 through A2DP to playing the incoming call ring tone on the Bluetooth headset 10 through HFP, the mobile phone 20 will pause an audio flow of the incoming call ring tone, so that a phenomenon of lag of the incoming call ring tone of the mobile phone 20 will occur.

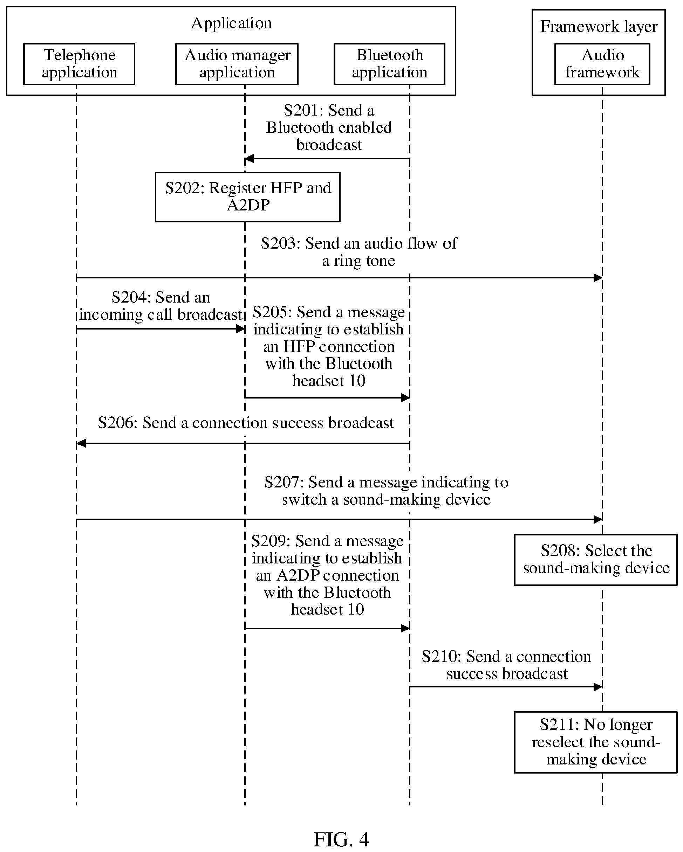

A specific flow of interaction in the mobile phone 20 when an incoming call of the mobile phone 20 occurs will be introduced below with reference to FIG. 4 and the software architecture of the mobile phone 20. FIG. 4 shows a schematic diagram of a flow of interaction in a mobile phone 20. As shown in FIG. 4, the flow of interaction includes the following steps:

S201: The Bluetooth application sends a Bluetooth enabling broadcast to the audio manager application.

When the Bluetooth of the mobile phone 20 is enabled, the Bluetooth application sends the Bluetooth enabling broadcast to the audio manager application.

S202: The audio manager application registers HFP and A2DP.

In the initialization phase of the mobile phone 20, for example, when the mobile phone 20 is started, the Bluetooth application is enabled manually by the user, or the mobile phone 20 has detected the Bluetooth headset 10 that has been paired previously but is not connected thereto, the audio manager application registers HFP and A2DP.

In some embodiments, the audio manager application may register HFP and A2DP by executing the getProfileProxy function. The specific implementation of registering HFP and A2DP by the audio manager application is not limited in this application.

In some embodiments, an implementation logic of a registration service may be included in the getProfileProxy function. HFP is registered by executing the getProfileProxy (context, mBluetoothListener, BluetoothProfile.HEADSET) function. A2DP is registered by executing the getProfileProxy (context, mBluetoothListener, BluetoothProfile.A2DP).

As mentioned above, the HFP features real-time audio transmission and is used to realize call services such as real-time voice. The A2DP features non-real-time audio transmission and is used to realize multimedia services such as playing music.

The progress of registering HFP and A2DP by the audio manager application is a parallel progress, i.e., the audio manager application will register HFP and A2DP simultaneously.

S203: The telephone application sends the audio flow of the ring tone to the audio framework.

When the incoming call of the mobile phone 20 occurs, the telephone application sends the audio flow of the ring tone to the audio framework.

In some embodiments, the audio flow of the ring tone sent by the telephone application is of a type of a stream_ring function, and the type of the audio flow of the ring tone is not limited in this application.

S204: The telephone application sends an incoming call broadcast to the audio manager application.

When the incoming call of the mobile phone 20 occurs, the telephone application sends the incoming call broadcast to the audio manager application.

In some embodiments, step S203 may be executed after step S204, i.e., the telephone application sends the incoming call broadcast of the mobile phone 20 to the audio manager application first and then sends the audio flow of the ring tone to the audio framework. The sequence of sending the audio flow of the ring tone and the incoming call broadcast by the telephone application is not limited in embodiments of this application.

In some embodiments, the incoming call broadcast may include a telephone number of the incoming call, operator information of the incoming call and the like.

S205: The audio manager application sends the message of establishment of the HFP connection with the Bluetooth headset 10 to the Bluetooth application.

When the mobile phone 20 receives the incoming call message, the audio manager application sends the message of establishment of the HFP connection with the Bluetooth headset 10 to the Bluetooth application according to the characteristic that the audio data of the call service is applicably transmitted through HFP, and the Bluetooth application may establish the HFP connection with the Bluetooth headset 10 first by calling the ConnectHfp function in the onServiceConnected function in executing the onServiceConnected function.

In some embodiments, the implementation logic to establish the HFP connection with the Bluetooth headset 10 may include enabling the Bluetooth application to establish the HFP connection with the Bluetooth headset 10 first through the connectHFP (bluetoothDevice) function by entering the onServiceConnected function after the mobile phone 20 registers HFP successfully.

S206: The Bluetooth application sends a broadcast that the connection is successful to the telephone application.

The Bluetooth application sends the broadcast of establishment of the HFP connection with the Bluetooth headset 10 to the telephone application.

In some embodiments, the Bluetooth application may send the broadcast that the connection is successful through a Context.sendBroadcast function.

S207: The telephone application sends the message of switching the sound-making device to the audio framework.

After receiving the message of establishment the HFP connection with the Bluetooth headset 10, the telephone application sends the message of switching the sound-making device to the audio framework.

S208: The audio framework selects a sound-making device.

The audio framework selects the Bluetooth headset 10 that establishes HFP connection with the mobile phone 20 as the sound-making device.

In some embodiments, the sound-making device may also be a speaker and an earpiece of the mobile phone 20 or a device such as a sound device connected to the mobile phone 20, and the type of the sound-making device is not limited in this application.

S209: The audio manager application sends the message of establishment of the A2DP connection with the Bluetooth headset 10 to the Bluetooth application.

To guarantee that both the call service and the multimedia service in the mobile phone 20 can be played through the Bluetooth headset 10, the mobile phone 20 needs to establish double connections of A2DP and HFP with the Bluetooth headset 10. After the mobile phone 20 establishes the HFP connection with the Bluetooth headset 10, the audio manager application sends the message of establishment of the A2DP connection with the Bluetooth headset 10 to the Bluetooth application.

In this application, the Bluetooth application may establish the AD2P connection with the Bluetooth headset 10 by executing the onServiceConnected function, for example, the Bluetooth application establishes the A2DP connection with the Bluetooth headset 10 by calling the ConnectA2dp function in the onServiceConnected function.

In some embodiments, the implementation logic to establish the A2DP connection with the Bluetooth headset 10 may include enabling the Bluetooth application to establish the A2DP connection with the Bluetooth headset 10 through the connectA2dp (bluetoothDevice) function by switching to the onServiceConnected function after the mobile phone 20 registers A2DP successfully.

S210: The Bluetooth application sends a broadcast that the connection is successful to the audio framework.

The Bluetooth application sends the broadcast of establishment of the A2DP connection with the Bluetooth headset 10 to the audio framework.

In some embodiments, the Bluetooth application may send the broadcast that the connection is successful through a Context.sendBroadcast function.

S211: The audio framework no longer reselects the sound-making device.

Because the call service is the audio data transmitted on the SCO link through the HFP, it features real-time audio transmission. To guarantee the call quality, the audio framework selects the Bluetooth headset 10 that establishes the HFP connection with the mobile phone 20 as the sound-making device and no longer reselects the sound-making device.

In this application, if the mobile phone 20 and the Bluetooth headset 10 are in the paired state but are not connected, the mobile phone 20 completes registrations of HFP and A2DP during initialization. If the mobile phone 20 receives the incoming call, the mobile phone 20 may establish the HFP connection with the Bluetooth headset 10 first, and then establishes the A2DP connection with the Bluetooth headset 10 according to the characteristic that the audio data of the call service is applicably transmitted through HFP. For example, the mobile phone 20 establishes the HFP connection with the Bluetooth headset 10 first by executing the ConnectHfp function in the onServiceConnected function; and then establishes the A2DP connection with the Bluetooth headset 10 by executing the ConnectA2dp function in the onServiceConnected function. Therefore, the incoming call ring tone of the mobile phone 20 will be played on the Bluetooth headset 10 through HFP. Therefore, the phenomenon of lag of the incoming call ring tone is avoided when playing of the incoming call ring tone of the mobile phone 20 by the Bluetooth headset 10 through the A2DP is switched to playing of the incoming call ring tone of the mobile phone by the Bluetooth headset 10 through the HFP, and the call experience of a user is improved.

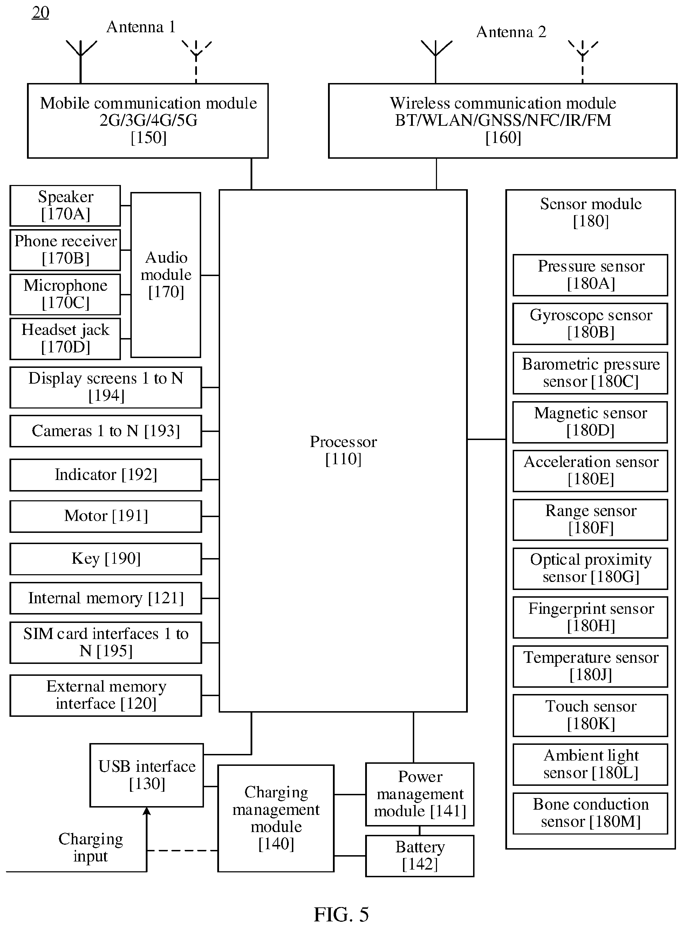

A hardware structure of the mobile phone 20 will be introduced below with reference to FIG. 5. Exemplarily, FIG. 5 is a schematic diagram of the hardware structure of a mobile phone 20. The mobile phone 20 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in embodiments of this application does not constitute a specific limitation on the mobile phone 20. In some other embodiments of this application, the mobile phone 20 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors. The controller may be a nerve center and a command center of the mobile phone 20. The controller may generate an operation control signal according to instruction operation code and a time-sequence signal, and control obtaining and executing of instructions. For example, in some embodiments of this application, the processor 110 may execute the communication method mentioned in this application.

A memory may also be disposed in the processor 110, configured to store instructions and data. In some embodiments, the memory in processor 110 is a cache memory. The processor 110 may execute the communication method mentioned in this application based on instructions and data.

The charging management module 140 is configured to receive charging input from the charger. The power management module 141 is configured to be connected to the battery 142, the charging management module 140, and the processor 110. A wireless communication function of the mobile phone 20 may be implemented through the antenna 1, the antenna 2, the mobile communication module 150, the wireless communication module 160, the modem processor, the baseband processor, and the like. The mobile communication module 150 may provide a solution to wireless communication such as 2G/3G/4G/5G applied to the mobile phone 20. The wireless communication module 160 may provide a solution to wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology and the like applied to the mobile phone 20. For example, in embodiments of this application, Bluetooth may be configured to establish the Bluetooth connection with the Bluetooth headset 10.

The mobile phone 20 implements a display function by using the GPU, the display screen 194, the application processor, and the like. The GPU is a microprocessor for image processing and connects the display screen 194 and the application processor. The GPU is configured to perform mathematical and geometric calculations for graphics rendering. The processor 110 may include one or more GPUs that execute a program instruction to generate or change display information.

The display screen 194 is configured to display an image, a video, and the like. The mobile phone 20 may implement a photographing function by using the ISP, the camera 193, the video codec, the GPU, the display screen 194, the application processor, and the like.

The mobile phone 20 may implement an audio function by using the audio module 170, the speaker 170A, the phone receiver 170B, the microphone 170C, the headset jack 170D, the application processor, and the like, for example, music playing, recording, and the like.

The audio module 170 is configured to convert digital audio information into analog audio signal output, and is further configured to convert analog audio input into a digital audio signal. The audio module 170 may further be configured to encode and decode audio signals. In some embodiments, the audio module 170 may be disposed in the processor 110, or some function modules in the audio module 170 are disposed in the processor 110. For example, in some embodiments of this application, the incoming call ring tone of the mobile phone 20 may be outputted by converting the digital audio information into an analog signal by using the audio module 170.

The speaker 170A, also referred to as "loudspeaker", is configured to convert an electrical audio signal into a sound signal. Music can be listened to or a hands-free call can be answered through the speaker 170A in the mobile phone 20. For example, in embodiments of this application, the speaker 170A of the mobile phone 20 may serve as the sound-making device of the incoming call ring tone.

The phone receiver 170B, also referred to as "earpiece", is configured to convert an electrical audio signal into a sound signal. When the mobile phone 20 is configured to answer a call or receive voice information, the phone receiver 170B may be put close to a human ear to receive a voice.

The microphone 170C, also referred to as "voice tube" or "mike", is configured to convert a sound signal into an electrical signal. When making a call or sending voice information, a user may make a sound by using the mouth close to the microphone 170C, to input a sound signal into the microphone 170C. At least one microphone 170C may be disposed in the mobile phone 20. In some other embodiments, two microphones 170C may be disposed in the mobile phone 20, to collect a sound signal and implement a noise reduction function. In some other embodiments, three, four, or more microphones 170C may be alternatively disposed in the mobile phone 20, to collect a sound signal, implement noise reduction, recognize a sound source, implement a directional recording function, and the like.

The headset jack 170D is configured to be connected to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The hardware structure that may belong to the mobile phone 20 is introduced above. It may be understood that the structure illustrated in this embodiment of this application does not constitute a specific limitation on the mobile phone 20. In some other embodiments of this application, the mobile phone 20 may include more or fewer components than those shown in the figure, or some components may be combined, or some components may be split, or components are arranged in different manners. The components shown in the figure may be implemented by hardware, software, or a combination of software and hardware.

This application provides a computer-readable storage medium, having an instruction stored therein, where the instruction, when executed on an electronic device, enables the electronic device to implement the communication method provided by this application.

This application provides an electronic device, including: a memory, configured to store an instruction executed by one or more processors of the electronic device; and a processor, configured to execute the instruction stored in the memory to implement the communication method provided by this application.

In the drawings, some structure or method features may be illustrated with a specific arrangement and/or sequence. However, it should be understood that such specific arrangement and/or sequence may be unnecessary. Rather, in some embodiments, such features may be arranged in modes and/or sequences different from those shown in the illustrative drawings. In addition, inclusion of the structure or method features in the specific drawings does not imply that such features are needed in all the embodiments, and in some embodiments, such features may not be included or they may be combined with other features.

It should be noted that all units/modules mentioned in the device embodiments of this application are logic units/modules. Physically, one logic unit/module may either be one physical unit/module or a part of one physical unit/module, or may alternatively be implemented by combining a plurality of physical units/modules. The physical implementations of the logic units/modules themselves are not the most important but combination of functions implemented by the logic units/modules is the key to solve the technical problem proposed in this application. In addition, in order to highlight an innovative portion of this application, units/modules that are not closely related to solving of the technical problems proposed by this application are not introduced in the device embodiments of this application, which does not mean that there are no other units/modules in the device embodiments.

It should be noted that in the examples and specification of this application, the relational terms such as first and second are used only to differentiate an entity or operation from another entity or operation, and do not require or imply any actual relationship or sequence between these entities or operations. Moreover, the terms "include," "comprise," and any variation thereof are intended to cover a non-exclusive inclusion. Therefore, in the context of a process, a method, an article, or a device that includes a series of elements, the process, method, article, or device not only includes such elements, but also includes other elements not specified expressly, or may include inherent elements of the process, method, article, or device. In absence of more constraints, an element preceded by the statement "includes a ..." does not preclude existence of identical elements in the process, method, article, or device that includes the element.

Although this application has been illustrated and described with reference to some preferred embodiments of this application, a person of ordinary skill in the art should understand that various modifications may be made to the embodiments in form and detail without departing from the scope of this application.

## Claims

1. A communication method, applied to a first electronic device (20), comprising:
corresponding to satisfying a first condition by the first electronic device, registering (S202), by the first electronic device, a hands-free profile, HFP, and an advanced audio distribution profile, A2DP;
receiving (S204), by the first electronic device, a first call after completing registration of the HFP and the A2DP;
in response to the first call, establishing (S205), by the first electronic device, a HFP connection with a Bluetooth headset (10), and sending, by the first electronic device, audio data corresponding to an incoming call ring tone to the Bluetooth headset through the HFP connection, wherein the first electronic device has been paired with the Bluetooth headset and has not established a Bluetooth connection with the Bluetooth headset prior to receiving the first call; and
establishing (S209), by the first electronic device, an A2DP connection with the Bluetooth headset after establishing, by the first electronic device, the HFP connection with the Bluetooth headset, and sending, by the first electronic device, the audio data to the Bluetooth headset through the HFP connection after completing establishment of the A2DP connection.

2. The method according to claim 1, wherein the corresponding to satisfying a first condition by the first electronic device (20), registering, by the first electronic device, a HFP and an A2DP comprises:
in response to a user operation, starting, by the first electronic device, a Bluetooth service; and
registering, by the first electronic device, the HFP and the A2DP after starting the Bluetooth service.

3. The communication method according to claim 1, wherein the first electronic device (20) establishes the HFP connection in the following manner:
sending, by an audio manager application in the first electronic device and to a Bluetooth application, a message indicating to establish the HFP connection with the Bluetooth headset (10), wherein the Bluetooth application establishes the HFP connection.

4. The communication method according to claim 3, wherein the sending, by the first electronic device (20), audio data corresponding to an incoming call ring tone to the Bluetooth headset (10) through the HFP connection comprises:
receiving, by a telephone application in the first electronic device, information indicating that the HFP connection is successfully established, and sending a sound-making device switching instruction to an audio framework; and
selecting, by the audio framework, as the sound-making device, the Bluetooth headset establishing the HFP connection with the first electronic device, and sending the audio data corresponding to the incoming call ring tone to the Bluetooth headset.

5. The communication method according to claim 3, wherein the establishing, by the first electronic device (20), an A2DP connection with the Bluetooth headset (10) comprises:
after establishing, by the first electronic device, the HFP connection, sending, by the audio manager application in the first electronic device and to the Bluetooth application, a message indicating to establish the A2DP connection with the Bluetooth headset, wherein the Bluetooth application establishes the A2DP connection.

6. A communication system, comprising: a Bluetooth headset (10), a first electronic device (20), and a second electronic device (30), wherein the first electronic device has been paired with the Bluetooth headset and has not established a Bluetooth connection therebetween, and the second electronic device (30) has been paired with the Bluetooth headset and has established a Bluetooth connection therebetween;
corresponding to satisfying a first condition by the first electronic device (20), the first electronic device registers a hands-free profile, HFP, and an advanced audio distribution profile, A2DP;
the first electronic device receives a first call after completing registration of the HFP and the A2DP;
in response to the first call, the first electronic device establishes a HFP connection with the Bluetooth headset, and the first electronic device sends audio data corresponding to an incoming call ring tone to the Bluetooth headset through the HFP connection;
the Bluetooth headset plays the audio data sent by the first electronic device; and the first electronic device establishes an A2DP connection with the Bluetooth headset after the first electronic device establishes the HFP connection with the Bluetooth headset, and the first electronic device sends the audio data to the Bluetooth headset through the HFP connection after completing establishment of the A2DP connection.

7. The system according to claim 6, wherein
in response to a user operation, the first electronic device (20) starts a Bluetooth service; and
the first electronic device registers the HFP and the A2DP after starting the Bluetooth service.

8. The system according to claim 6, wherein
before the Bluetooth headset (10) plays the audio data sent by the first electronic device, the Bluetooth headset plays audio data sent by the second electronic device.

9. The system according to claim 6, wherein
after the first electronic device receives the first call, the Bluetooth headset interrupts the Bluetooth connection with the second electronic device.

10. An electronic device, comprising:
a memory, configured to store instructions executed by one or more processors of the electronic device; and
a processor, configured to execute the instructions stored in the memory, to implement the communication method according to any one of claims 1 to 5.

## Patentansprüche

1. Ein Kommunikationsverfahren, angewendet auf ein erstes elektronisches Gerät (20), umfassend:
entsprechend der Erfüllung einer ersten Bedingung durch das erste elektronische Gerät registriert (S202) das erste elektronische Gerät ein Freisprechprofil (HFP) und ein erweitertes Audioübertragungsprofil (A2DP);
nach Abschluss der Registrierung des HFP und A2DP empfängt (S204) das erste elektronische Gerät einen ersten Anruf;
als Reaktion auf den ersten Anruf baut (S205) das erste elektronische Gerät eine HFP-Verbindung mit einem Bluetooth-Headset (10) auf und sendet Audiodaten, die dem Klingelton eines eingehenden Anrufs entsprechen, über die HFP-Verbindung an das Bluetooth-Headset, wobei das erste elektronische Gerät bereits mit dem Bluetooth-Headset gekoppelt wurde und vor dem Empfang des ersten Anrufs keine Bluetooth-Verbindung mit dem Bluetooth-Headset hergestellt wurde; und
nachdem die HFP-Verbindung mit dem Bluetooth-Headset hergestellt wurde, wird (S209) durch das erste elektronische Gerät eine A2DP-Verbindung mit dem Bluetooth-Headset hergestellt und die Audiodaten werden durch das erste elektronische Gerät auch nach der Herstellung der A2DP-Verbindung weiterhin über die HFP-Verbindung an das Bluetooth-Headset gesendet.

2. Das Verfahren nach Anspruch 1, wobei das entsprechende Erfüllen einer ersten Bedingung durch das erste elektronische Gerät (20) und die Registrierung eines HFP und eines A2DP durch das erste elektronische Gerät beinhaltet:
als Reaktion auf eine Benutzeraktion startet das erste elektronische Gerät einen Bluetooth-Dienst; und
nach dem Start des Bluetooth-Dienstes registriert das erste elektronische Gerät das HFP und das A2DP.

3. Das Kommunikationsverfahren nach Anspruch 1, wobei das erste elektronische Gerät (20) die HFP-Verbindung auf folgende Weise herstellt:
eine Audiomanager-Anwendung im ersten elektronischen Gerät sendet an eine Bluetooth-Anwendung eine Nachricht mit dem Hinweis, die HFP-Verbindung mit dem Bluetooth-Headset (10) herzustellen, wobei die Bluetooth-Anwendung die HFP-Verbindung aufbaut.

4. Das Kommunikationsverfahren nach Anspruch 3, wobei das Senden von Audiodaten, die dem Klingelton eines eingehenden Anrufs entsprechen, vom ersten elektronischen Gerät (20) an das Bluetooth-Headset (10) über die HFP-Verbindung Folgendes umfasst:
eine Telefonanwendung im ersten elektronischen Gerät empfängt die Information, dass die HFP-Verbindung erfolgreich aufgebaut wurde, und sendet einen Umschaltbefehl für das Tongerät an ein Audio-Framework; und
Die Auswahl, durch das Audio-Framework, als das tonerzeugende Gerät, das Bluetooth-Headset, das die HFP-Verbindung mit dem ersten elektronischen Gerät herstellt, und das Senden der Audiodaten, die dem Klingelton des eingehenden Anrufs entsprechen, an das Bluetooth-Headset.

5. Das Kommunikationsverfahren nach Anspruch 3, wobei das Herstellen einer A2DP-Verbindung durch das erste elektronische Gerät (20) mit dem Bluetooth-Headset (10) umfasst:
Nach dem Aufbau der HFP-Verbindung durch das erste elektronische Gerät sendet die Audiomanager-Anwendung im ersten elektronischen Gerät eine Nachricht an die Bluetooth-Anwendung, um das Herstellen der A2DP-Verbindung mit dem Bluetooth-Headset anzuzeigen, wobei die Bluetooth-Anwendung die A2DP-Verbindung herstellt.

6. Ein Kommunikationssystem, umfassend: ein Bluetooth-Headset (10), ein erstes elektronisches Gerät (20) und ein zweites elektronisches Gerät (30), wobei das erste elektronische Gerät mit dem Bluetooth-Headset gekoppelt ist, aber noch keine Bluetooth-Verbindung hergestellt hat, und das zweite elektronische Gerät (30) mit dem Bluetooth-Headset gekoppelt ist und bereits eine Bluetooth-Verbindung hergestellt hat;
entsprechend dem Erfüllen einer ersten Bedingung durch das erste elektronische Gerät (20) registriert das erste elektronische Gerät ein Freisprechprofil (HFP) und ein Advanced Audio Distribution Profile (A2DP);
Das erste elektronische Gerät empfängt einen ersten Anruf, nachdem die Registrierung des HFP und des A2DP abgeschlossen wurde;
Als Reaktion auf den ersten Anruf stellt das erste elektronische Gerät eine HFP-Verbindung mit dem Bluetooth-Headset her und das erste elektronische Gerät sendet Audiodaten, die einem eingehenden Klingelton entsprechen, über die HFP-Verbindung an das Bluetooth-Headset;
Das Bluetooth-Headset gibt die vom ersten elektronischen Gerät gesendeten Audiodaten wieder; und
Das erste elektronische Gerät stellt eine A2DP-Verbindung mit dem Bluetooth-Headset her, nachdem es die HFP-Verbindung hergestellt hat, und das erste elektronische Gerät sendet die Audiodaten nach der Herstellung der A2DP-Verbindung weiterhin über die HFP-Verbindung an das Bluetooth-Headset.

7. Das System nach Anspruch 6, wobei
als Reaktion auf eine Benutzeraktion startet das erste elektronische Gerät (20) einen Bluetooth-Dienst; und
das erste elektronische Gerät registriert das HFP und das A2DP nach dem Starten des Bluetooth-Dienstes.

8. Das System nach Anspruch 6, wobei
Bevor das Bluetooth-Headset (10) die vom ersten elektronischen Gerät gesendeten Audiodaten wiedergibt, gibt das Bluetooth-Headset die vom zweiten elektronischen Gerät gesendeten Audiodaten wieder.

9. System gemäß Anspruch 6, wobei
Nachdem das erste elektronische Gerät den ersten Anruf entgegengenommen hat, unterbricht das Bluetooth-Headset die Bluetooth-Verbindung mit dem zweiten elektronischen Gerät.

10. Elektronisches Gerät, umfassend:
einen Speicher, der dazu konfiguriert ist, Anweisungen zu speichern, die von einem oder mehreren Prozessoren des elektronischen Geräts ausgeführt werden; und
einen Prozessor, der dazu konfiguriert ist, die im Speicher gespeicherten Anweisungen auszuführen, um das Kommunikationsverfahren gemäß einem der Ansprüche 1 bis 5 zu implementieren.

## Revendications

1. Procédé de communication, appliqué à un premier dispositif électronique (20), comprenant :
correspondant à la satisfaction d'une première condition par le premier dispositif électronique, enregistrement (S202), par le premier dispositif électronique, d'un profil mains libres (HFP) et d'un profil de distribution audio avancé (A2DP) ;
réception (S204), par le premier dispositif électronique, d'un premier appel après l'achèvement de l'enregistrement du HFP et de l'A2DP ;
en réponse au premier appel, établissement (S205), par le premier dispositif électronique, d'une connexion HFP avec un casque Bluetooth (10), et envoi, par le premier dispositif électronique, de données audio correspondant à la tonalité de sonnerie d'un appel entrant au casque Bluetooth via la connexion HFP, le premier dispositif électronique ayant été appairé avec le casque Bluetooth et n'ayant pas établi de connexion Bluetooth avec le casque Bluetooth avant la réception du premier appel ; et
établissement (S209), par le premier dispositif électronique, d'une connexion A2DP avec le casque Bluetooth après l'établissement, par le premier dispositif électronique, de la connexion HFP avec le casque Bluetooth, et envoi, par le premier dispositif électronique, des données audio au casque Bluetooth via la connexion HFP après la complétion de l'établissement de la connexion A2DP.

2. Procédé selon la revendication 1, dans lequel le fait de correspondre à la satisfaction d'une première condition par le premier dispositif électronique (20), l'enregistrement, par le premier dispositif électronique, d'un HFP et d'un A2DP comprend :
en réponse à une opération de l'utilisateur, démarrage, par le premier dispositif électronique, d'un service Bluetooth ; et
enregistrement, par le premier dispositif électronique, du HFP et de l'A2DP après le démarrage du service Bluetooth.

3. Procédé de communication selon la revendication 1, dans lequel le premier dispositif électronique (20) établit la connexion HFP de la manière suivante :
envoi, par une application de gestion audio dans le premier dispositif électronique à une application Bluetooth, d'un message indiquant d'établir la connexion HFP avec le casque Bluetooth (10), l'application Bluetooth établissant la connexion HFP.

4. Procédé de communication selon la revendication 3, dans lequel l'envoi, par le premier dispositif électronique (20), de données audio correspondant à une tonalité de sonnerie d'appel entrant au casque Bluetooth (10) via la connexion HFP comprend :
réception, par une application téléphone dans le premier dispositif électronique, d'une information indiquant que la connexion HFP est établie avec succès, et envoi d'une instruction de commutation de dispositif de production sonore à un cadre audio ; et
sélection, par la structure audio, en tant que dispositif sonore, de l'oreillette Bluetooth établissant la connexion HFP avec le premier dispositif électronique, et envoi des données audio correspondant à la sonnerie d'appel entrant à l'oreillette Bluetooth.

5. Procédé de communication selon la revendication 3, dans lequel l'établissement, par le premier dispositif électronique (20), d'une connexion A2DP avec l'oreillette Bluetooth (10) comprend :
après l'établissement, par le premier dispositif électronique, de la connexion HFP, envoi, par l'application de gestion audio du premier dispositif électronique à l'application Bluetooth, d'un message indiquant d'établir la connexion A2DP avec l'oreillette Bluetooth, l'application Bluetooth établissant ladite connexion A2DP.

6. Un système de communication, comprenant : une oreillette Bluetooth (10), un premier dispositif électronique (20) et un second dispositif électronique (30), le premier dispositif électronique ayant été appairé avec l'oreillette Bluetooth sans avoir établi de connexion Bluetooth entre eux, et le second dispositif électronique (30) ayant été appairé avec l'oreillette Bluetooth et ayant établi une connexion Bluetooth entre eux ;
correspondant à la satisfaction d'une première condition par le premier dispositif électronique (20), ce dernier enregistre un profil mains-libres, HFP, et un profil de distribution audio avancée, A2DP ;
le premier dispositif électronique reçoit un premier appel après avoir terminé l'enregistrement des profils HFP et A2DP ;
en réponse au premier appel, le premier dispositif électronique établit une connexion HFP avec l'oreillette Bluetooth, et envoie à l'oreillette Bluetooth, via la connexion HFP, les données audio correspondant à la sonnerie d'appel entrant ;
l'oreillette Bluetooth lit les données audio envoyées par le premier dispositif électronique ; et
le premier dispositif électronique établit une connexion A2DP avec l'oreillette Bluetooth après avoir établi la connexion HFP avec celle-ci, et le premier dispositif électronique envoie les données audio à l'oreillette Bluetooth via la connexion HFP après avoir terminé l'établissement de la connexion A2DP.

7. Système selon la revendication 6, dans lequel
en réponse à une opération utilisateur, le premier dispositif électronique (20) lance un service Bluetooth ; et
le premier dispositif électronique enregistre les profils HFP et A2DP après avoir lancé le service Bluetooth.

8. Système selon la revendication 6, dans lequel
avant que l'oreillette Bluetooth (10) ne lise les données audio envoyées par le premier dispositif électronique, l'oreillette Bluetooth lit les données audio envoyées par le second dispositif électronique.

9. Le système selon la revendication 6, dans lequel
après que le premier dispositif électronique a reçu le premier appel, le casque Bluetooth interrompt la connexion Bluetooth avec le second dispositif électronique.

10. Un dispositif électronique, comprenant :
une mémoire, configurée pour stocker des instructions exécutées par un ou plusieurs processeurs du dispositif électronique ; et
un processeur, configuré pour exécuter les instructions stockées dans la mémoire afin de mettre en œuvre le procédé de communication selon l'une quelconque des revendications 1 à 5.
